# EUROPEAN PATENT SPECIFICATION

(11) **EP 3 337 955 B1**
(45) Date of publication and mention of the grant of the patent: **12.02.2020**
(21) Application number: 15906835.2
(22) Date of filing: 21.10.2015
(51) Int. Cl.: E21B 47/12, E21B 47/13, H01Q 7/06

(54) **HYBRID TRANSCEIVER FOR DOWNHOLE TELEMETRY**
HYBRIDER SENDE-EMPFÄNGER FÜR BOHRLOCHTELEMETRIE
ÉMETTEUR-RÉCEPTEUR HYBRIDE POUR TÉLÉMESURE DE FOND DE TROU

(43) Date of publication of application: 27.06.2018
(73) Proprietor: Halliburton Energy Services, Inc., Houston, TX 77032-3219 (US)
(72) Inventor: MA, Jin, Houston, Texas 77064 (US); WILSON, Glenn A., Houston, TX 77009 (US)
(74) Representative: Hoffmann Eitle
(86) International application number: PCT/US2015/056707
(87) International publication number: WO 2017/069753

(56) References cited:
- WO-A1-96/41397
- US-A- 5 359 324
- US-A- 6 114 851
- US-A1- 2009 153 355
- US-A1- 2014 084 946
- US-B1- 6 556 054
- US-B1- 6 727 827
- US-B1- 6 727 827

## Description

### BACKGROUND

In drilling applications, bottom hole assemblies (BHA) may include a drill bit, a rotary steerable system (RSS), a mud motor, and one or more measuring-while-drilling/logging-while-drilling (MWD/LWD) tools. It may be advantageous to know real-time near-bit information (e.g., drilling shocks, vibrations, temperature of drill bit, rotating speed of motor, formation properties) in order to perform real-time adjustment of drilling inclination angle with the RSS to improve drilling performance. It may be difficult transferring signals from the drill bit to the MWD/LWD tool across the mud motor, and other near bit subs, due to the architecture and movement of the intervening mud motor and subs.

US 2014/0084946 A1 discloses systems and methods for wireless power and data communication transmissions between a cartridge in a rotary steering system and components within a drill collar. However, US 2014/0084946 A1 does not disclose a transceiver for downhole telemetry as disclosed herein.

### SUMMARY

In one aspect of the present invention, there is disclosed a hybrid toroid and band gap transceiver according to Claim 1.

In a second aspect of the present invention, there is disclosed a method according to Claim 8.

In a third aspect of the present invention, there is disclosed a system according to Claim 12.

### BRIEF DESCRIPTION OF THE DRAWINGS

FIG. 1 is a circuit schematic of an equivalent circuit of a hybrid toroid and band gap transceiver apparatus operating in a transmitting mode, according to various examples of the disclosure.
FIG. 2 is a circuit schematic of an equivalent circuit of a hybrid toroid and band gap transceiver apparatus operating in a receiving mode, according to various examples of the disclosure.
FIG. 3 is a cross-sectional diagram of the hybrid toroid and band gap transceiver apparatus, according to various examples of the disclosure.
FIG. 4 is a diagram of a drill string including a pair of hybrid toroid and band gap transceivers, according to various examples of the disclosure.
FIG. 5 is a flowchart of a method for downhole telemetry, according to various examples of the disclosure.
FIG. 6 presents graphs showing received voltage-signal per transmitting power for a toroid transceiver and a hybrid toroid and band gap transceiver, according to various examples of the disclosure.
FIG. 7 presents graphs showing impedances for a toroid transceiver and a hybrid toroid and band gap transceiver, according to various examples of the disclosure.
FIG. 8 is a graph showing a comparison of received voltage-signal per transmitting powers of different insulating gaps for a hybrid toroid and band gap transceiver, according to various examples of the disclosure.
FIG. 9 is a diagram showing a drilling system, according to various examples of the disclosure.
FIG. 10 is a diagram showing a wireline system, according to various examples of the disclosure.
FIG. 11 is a block diagram of an example system operable to implement the activities of multiple methods, according to various examples of the disclosure.

### DETAILED DESCRIPTION

Some of the challenges noted above, as well as others, can be addressed by using a hybrid transceiver (i.e., hybrid toroid and band gap transceiver) in drill strings or wireline tools to communicate over relatively short distances (e.g., approximately less than 30 meters) and, thus, provide downhole telemetry between tools or subs that may conventionally have difficulty communicating.

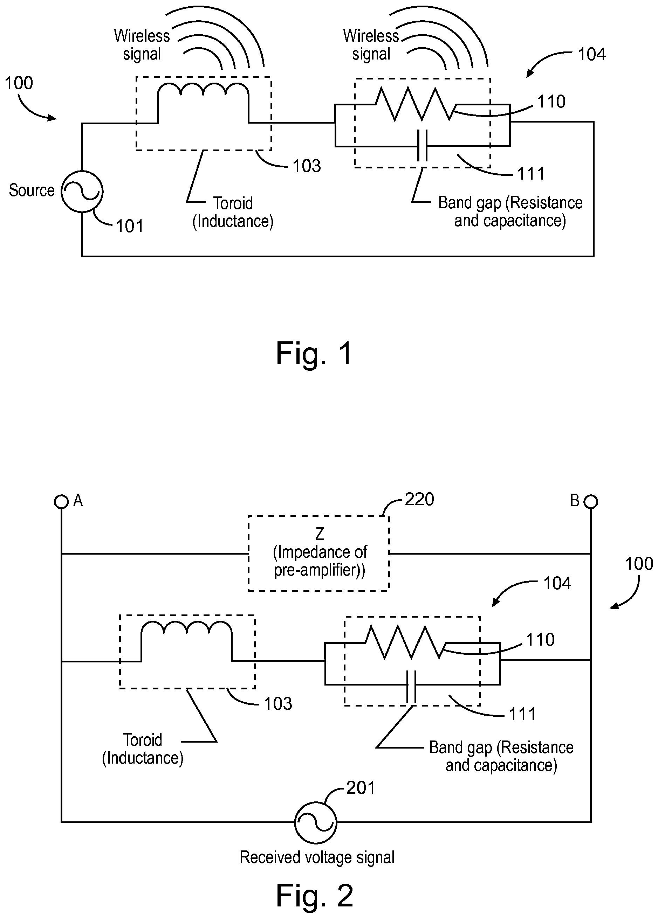

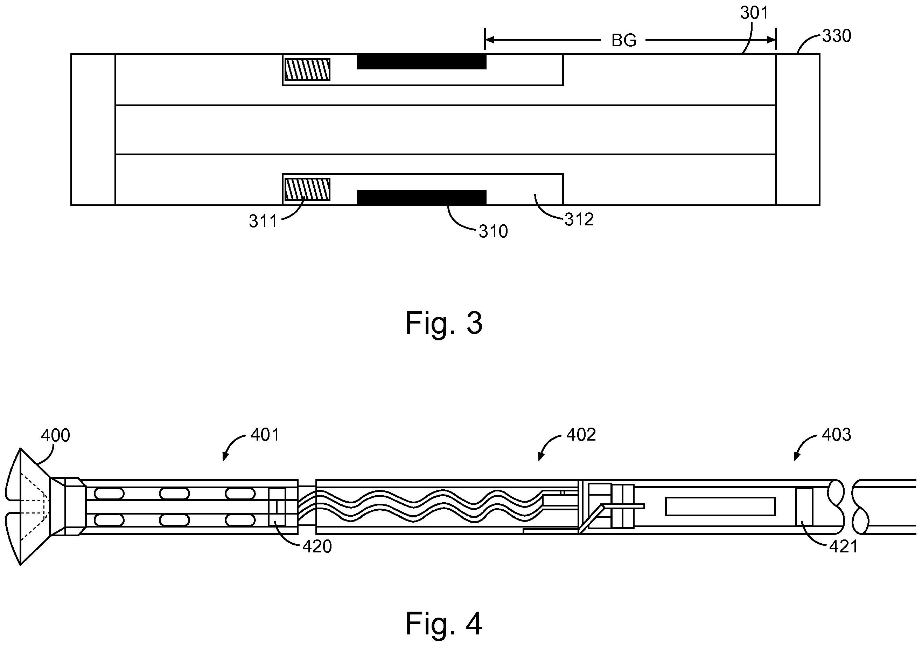

FIG. 1 is a circuit schematic of an equivalent circuit of a hybrid toroid and band gap transceiver apparatus 100 operating in a transmitting mode, according to various examples of the disclosure. The illustrated equivalent circuit is representative of the apparatus of FIG. 3 while transmitting a signal to another transceiver apparatus.

The equivalent circuit includes an inductance (e.g., toroid antenna) 103 connected in series with a band gap 104 (e.g., band gap antenna). The band gap 104 may be represented by a resistance 110 (e.g., resistor) in parallel with a capacitance 111 (e.g., capacitor). The series circuit of the inductance 103 and the band gap 104 is connected in series with a signal source 101. Both the toroid 103 and the band gap 104 may transmit signals by injecting inductive/conductive currents simultaneously. The transmitting current from toroid 103 and band gap 104 may operate in the same direction/phase from the transmitter to the receiver.

In resistive mud and geological formations, toroids may have poor transmission efficiency while band gaps may have high transmission efficiency. In conductive mud and geological formations, toroids may have stable impedances while band gaps may not. These respective advantages can be combined in the hybrid transceiver by connecting the toroid and band gap transceivers in series. As a result, since band gap transceivers have a relatively large impedance (compared to the toroid transceiver) in a resistive environment, power from the signal source 101 is generally distributed to the band gap transceiver 104 when the environment is resistive. Similarly, since the band gap transceiver 104 has a relatively small impedance (compared to the toroid transceiver) in a conductive environment, power from the signal source 101 is generally distributed to the toroid transceiver 103 in a conductive environment. The result is a hybrid transceiver that provides robust functional efficiency in the presence of variable mud and formation resistivity.

In an example, the transmitting mode hybrid transceiver apparatus 100 of FIG. 1 may be located in a drill bit, RSS, tool, or other downhole device and transmits data (i.e., via signal source 101) past an intervening mud motor, sub, or tool to another downhole device such as a tool (e.g., MWD/LWD tool) located uphole from the transmitting signal source 101. Thus, the signal source 101 may provide telemetry that is transmitted uphole. The uphole tool includes another hybrid transceiver in a receiving mode, as illustrated in FIG. 2.

FIG. 2 is a circuit schematic of an equivalent circuit of a hybrid toroid and band gap transceiver apparatus 100 operating in a receiving mode, according to various examples of the disclosure. The illustrated equivalent circuit is representative of the apparatus 100 of FIG. 3 while receiving a signal from another transceiver apparatus in the transmitting mode. The final received signal 201 is a sum of signals from the toroid 103 and bandgap 104. The toroid 103 and band gap 104 may operate in the same direction and phase from the receiver to the transmitter.

The hybrid transceiver operating in the receiving mode may be represented as a series combination of the toroid 103 and the band gap 104. The band gap 104 may further be represented by the resistance 110 and the capacitance 111 connected in parallel. The received voltage signal 201 is represented as a potential across the series connection of the toroid 103 and band gap 104. The potential may be applied across a high impedance load that is representative of an input to a pre-amplifier 220. The preamplifier impedance 220 may be chosen such that it ensures that the transfer function for the potential across the band gap and/or toroid appears across terminals *A* and *B* for any realistic impedance of the band gap and toroid series connection.

In an example, the hybrid transceiver 100, operating in the receiving mode, may be located in a tool (e.g., MWD/LWD tool) uphole from the transmitting source. The received voltage signal 201 may be representative of telemetry transmitted from downhole. In another example, the hybrid transceiver located uphole may be in a transmitting mode in order to transmit telemetry downhole to a hybrid transceiver in a receiving mode.

FIG. 3 is a cross-sectional diagram of the hybrid toroid and band gap transceiver apparatus 100, according to various examples of the disclosure. The hybrid transceiver 100 is illustrated as being implemented in a cylindrical tool housing 301. However, other examples may implement the hybrid transceiver 100 in any other types of housings, depending on the operation and/or environment in which the transceiver is being used. Similarly, the mechanical orientation of the toroid and band gap antennas is for purposes of illustration only as other orientations may be used to accomplish substantially the same task.

The housing 301 may include the toroid antenna 311 mounted circumferentially around the housing 301. The toroid antenna 311 induces a current upon the tool body 301 and, thus, creates a potential (i.e., electric field) into the geological formation. The impedance of the toroid antenna 311 is relatively insensitive to the surrounding mud and formation enabling impedance matching with transceiver electronics. However, as a result of a weak induced current loop through the mud and formation, a toroid antenna 311 by itself may suffer from low transmission efficiency when the mud and formation resistivity is low.

The toroid antenna 311 may comprise a mu metal magnetic core with stainless steel windings. Other examples may use other types of toroid antenna structures.

The band gap antenna 310, 330 may also be mounted circumferentially around the housing 301. The band gap antenna includes two poles 310, 330. One pole 310 is disposed substantially adjacent to and longitudinally along the housing 301 from the toroid antenna 311. A second band gap antenna pole 330 may be a collar of the housing 301. Other examples may locate the second antenna pole 330 in other locations on the housing 301. The two antenna poles 310, 330 are separated by the band gap BG as illustrated in FIG. 3.

With two poles 310, 330, the band gap antenna 310, 330 is able to transmit current from one pole 310 to the other pole 330 and, thus, create a potential (i.e., electric field) into the geological formation. The band gap antenna 310, 330 may be stable and efficient in both lossy and resistive downhole environments. However, since the two poles 310, 330 of the gap antenna are both exposed to the borehole, the current flows directly from one pole to the other pole through the borehole and formation. As a result, the impedance of the gap antennas 310, 330 may depend mostly on the resistivity of the mud and formation. When the mud and formation become conductive (e.g., resistivity < 0.5 Ohm), the impedance of the band gap antenna 310, 330 may become small (e.g., approximately 0.4 Ohm) which makes impedance matching with electronic circuits more difficult as well as reducing the transmission efficiency. Furthermore, in order to maintain transmission efficiency, the length of the band gap BG may be difficult to reduce to a compact form, resulting in less space efficiency for downhole tools. Thus, the combination of the toroid antenna 311 and the band gap antenna 310, 330 in the hybrid transceiver 100 enables the hybrid transceiver 100 to benefit from the positive attributes of both antennas.

Both the toroid antenna 311 and one pole 310 of the band gap antenna may be mounted in and separated by a dielectric material 312. The dielectric material may include any non-conductive material, such as ceramic, that can tolerate downhole conditions of heat and vibration. The dielectric material 312 is disposed circumferentially around the tool housing 301.

In another example, the toroid antenna 311 and the band gap antenna 310 may be mounted in a circumferential manner but concentrically around the housing 301. For example, the toroid antenna 311 may be disposed beneath the band gap antenna 310 and separated from each other by the dielectric material 312. In another example, the toroid antenna 311 may be disposed above the band gap antenna 310 and separated from each other by the dielectric material 312.

The cross-sectional diagram of the hybrid transceiver 100 shows only one transceiver. At least one other transceiver may be located on the drill string or wireline such that one transceiver is in a transmitting mode and the other transceiver is in a receiving mode. An example of such a configuration is illustrated in FIG. 4.

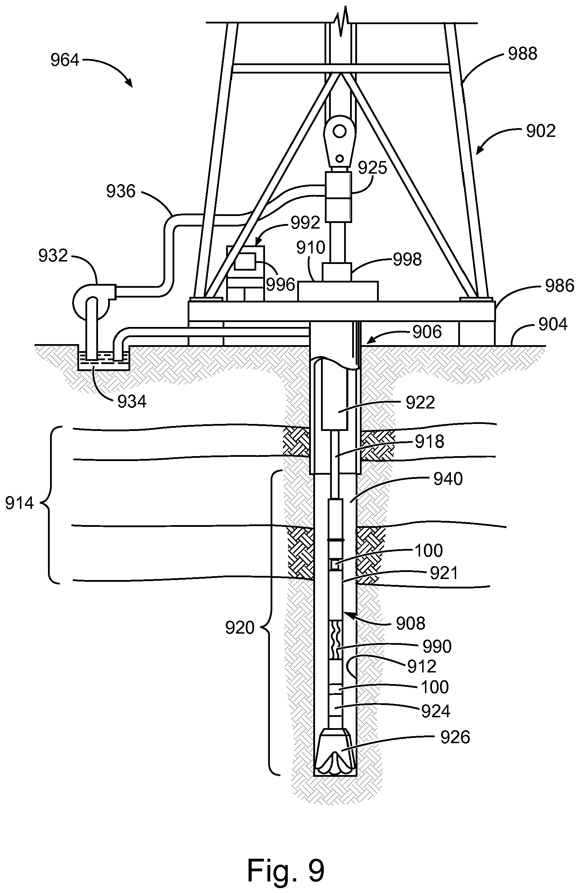

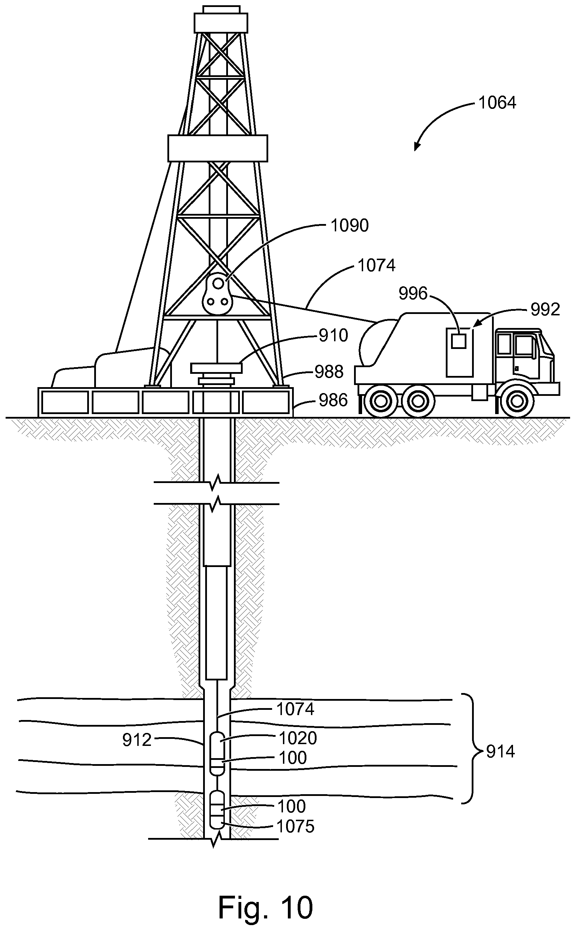

FIG. 4 is a diagram of a drill string including a pair of hybrid toroid and band gap transceivers 400, 401, according to various examples of the disclosure. The hybrid transceivers 400, 401 may be identical to apparatus 100. The example of FIG. 4 is for purposes of illustration only as the hybrid transceiver may be implemented in other drill string configurations as well as in a wireline embodiment, such as illustrated in the systems of FIGs. 9 and 10.

The drill string may include a drill bit 400 coupled to an RSS 401 that provides control of a drilling inclination angle of the drill bit 400. A mud motor 402 may be coupled to the RSS 401 to provide the rotary motion for the drill bit 400. The mud motor 402 may rotate in response to drilling fluid (e.g., mud) being injected into the motor 402. A MWD/LWD tool 403 may be coupled to the mud motor 402 to provide geological formation measurements during the drilling operation.

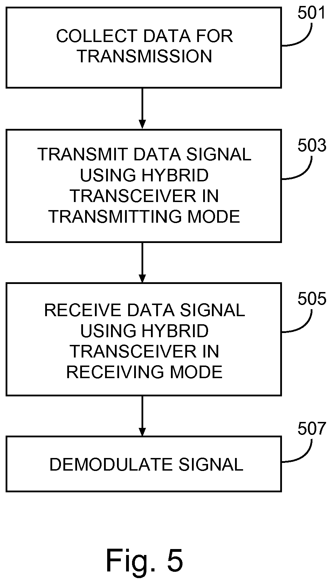

The RSS 401 may include one hybrid transceiver 420 and the MWD/LWD tool 403 may include another hybrid transceiver 421. Thus, the RSS 401 may communicate telemetry from the downhole hybrid transceiver 420 to the uphole hybrid transceiver 421 located in the MWD/LWD tool 403. With such a configuration, the downhole hybrid transceiver 420 may transmit drill bit vibration, rotation, and temperature data to be received at the MWD/LWD tool 403. The MWD/LWD tool 403 may also transmit control signals to the RSS 401 in response to the downhole telemetry. In both cases, the signals bypass the intervening mud motor 402. One such method of operation is illustrated in the flowchart of FIG. 5.

FIG. 5 is a flowchart of a method for downhole telemetry, according to various examples of the disclosure. Downhole data is collected for transmission in block 501. The data may include information about drilling shocks, vibrations, drill bit temperature, drill bit or motor rotating speed, current inclination angle, desired inclination angle, or any other downhole data.

In block 503, a signal representative of the downhole data is transmitted using a hybrid transceiver in the transmitting mode. The signal may be generated by modulating the downhole data to produce a modulated representation of the downhole data prior to transmission.

The signal may be transmitted from a first hybrid transceiver disposed on a downhole device. In one example, the signal may be transmitted from a first downhole device to a second downhole device that is located uphole relative to the first device. In another example, the signal may be transmitted from the second device to the first device that is located downhole relative to the first device.

In block 505, the modulated data signal is received by a second hybrid transceiver in the receiving mode. The second hybrid transceiver may be substantially identical to the first hybrid transceiver or a different configuration as discussed previously. In block 507, the received signal may be demodulated to reproduce the downhole data if it was modulated prior to transmission.

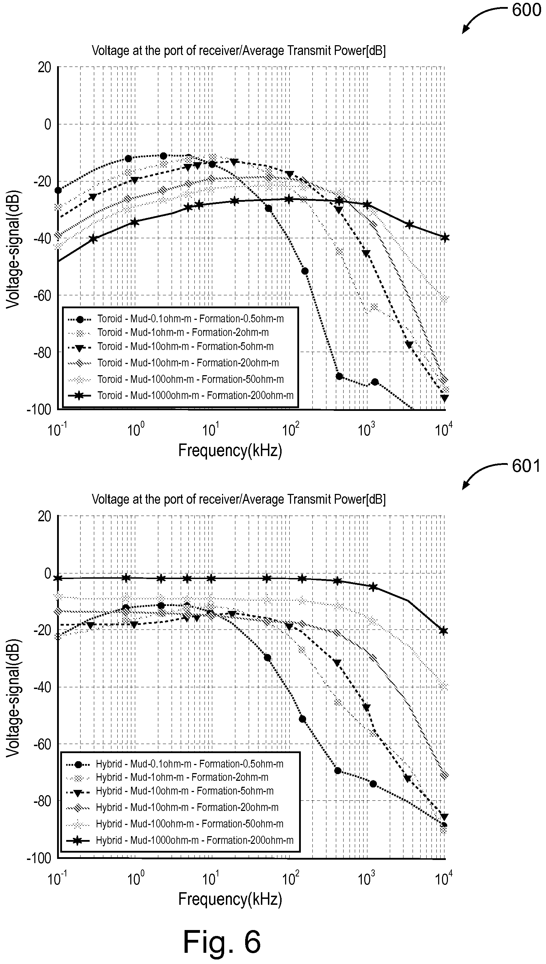

FIG. 6 presents graphs 600, 601 showing received voltage-signal per transmitting power for a toroid transceiver and a hybrid toroid and band gap transceiver, according to various examples of the disclosure. A first graph 600 shows the received voltage-signal per transmitting power for a toroid transceiver. A second graph 601 shows the received voltage-signal per transmitting power for the hybrid toroid and band gap transceiver 100.

These graphs 600, 601 show the received signal frequency (in kilohertz (kHz)) along the x-axis and the voltage-signal per transmitting power (in decibels (dB)) along the y-axis. The graphs 600, 601 show the received voltage-signal, at various signal frequencies, of a plurality of different mud and formation resistances per meter (m).

Comparing the plots resulting from the hybrid transceiver to the plots resulting from the toroid transceiver, it can be seen that the transmission efficiency of the hybrid transceiver is improved in higher resistivity formations and mud over the toroid transceiver by itself. Thus, the hybrid transceiver may result in more efficient downhole communication as compared to a toroid transceiver.

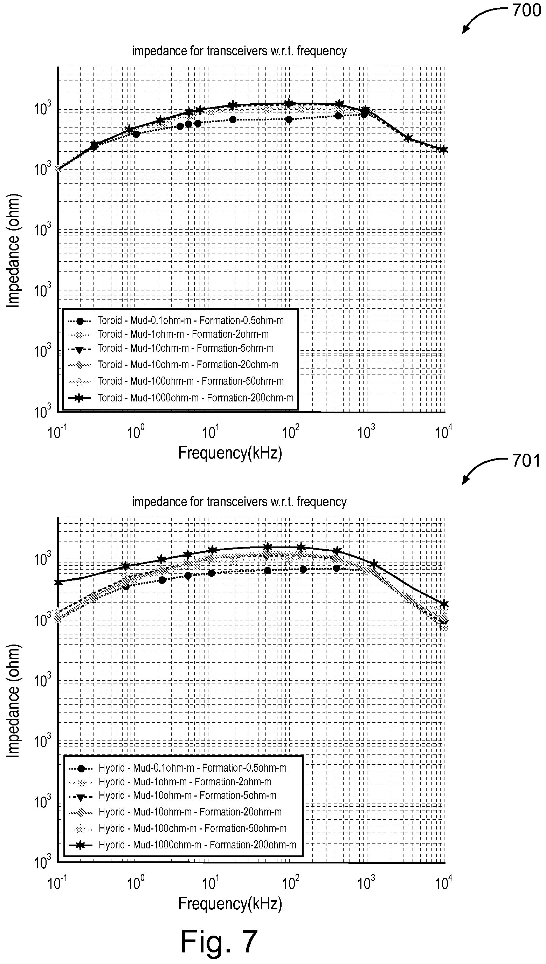

FIG. 7 presents graphs 700, 701 showing impedances for a toroid transceiver and a hybrid toroid and band gap transceiver, according to various examples of the disclosure. A first graph 700 shows the transceiver impedances, in various mud and formation resistivities, for a toroid transceiver. A second graph 701 shows the transceiver impedances, in various mud and formation resistivities, for a hybrid toroid and band gap transceiver.

These graphs 700, 701 show the received signal frequency (in kHz) along the x-axis and the antenna impedance (in Ohms) along the y-axis. The graphs 700, 701 show the different impedances, at various signal frequencies, of a plurality of different mud and formation resistances per meter (m).

Comparing the plots resulting from the hybrid transceiver to the plots resulting from the toroid transceiver, it can be seen that the impedances for both transceivers are relatively stable in the various different mud and formation resistivities. Thus, the hybrid transceiver exhibits the same desirable impedance characteristics as the toroid transceiver.

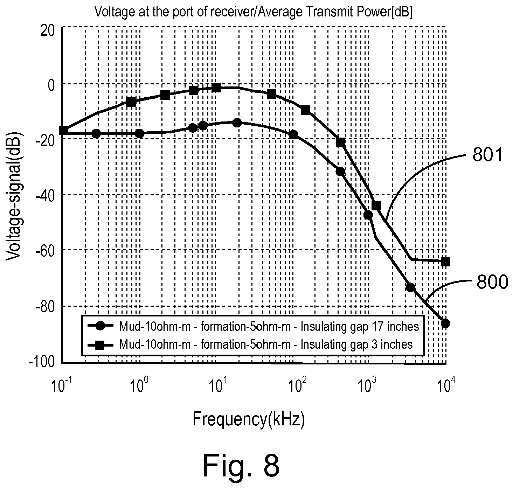

Unlike a band gap transceiver in which larger band gap is desirable, the hybrid transceiver may comprise a relatively shorter band gap and still remain relatively efficient. This can be seen in the graph of FIG. 8.

FIG. 8 is a graph showing a comparison of received voltage-signal per transmitting power of different insulating gaps for a hybrid toroid and band gap transceiver, according to various examples of the disclosure. The data displayed in FIG. 8 represents the performance of band gaps of seventeen inches and three inches. These band gaps are for purposes of illustration only as other band gaps produce substantially similar results. The graph of FIG. 8 shows the received signal frequency (in kHz) along the x-axis and the voltage-signal per transmitting power (in dB) along the y-axis.

One plot 800 of FIG. 8 shows the received voltage-signal per transmitting power, at various frequencies, resulting from a hybrid transceiver having a relatively large band gap (e.g., 17 inches). The second plot 801 shows the received voltage-signal per transmitting power, at various frequencies, resulting from a hybrid transceiver having a relatively small band gap (e.g., 3 inches). It can be seen that the more compact band gap of the hybrid transceiver results in relatively more efficient transmission when compared to the larger band gap results.

FIG. 9 is a diagram showing a drilling system 964, according to various examples of the disclosure. The system 964 includes a drilling rig 902 located at the surface 904 of a well 906. The drilling rig 902 may provide support for a drillstring 908. The drillstring 908 may operate to penetrate the rotary table 910 for drilling the borehole 912 through the subsurface formations 914. The drillstring 908 may include a drill pipe 918 and a bottom hole assembly (BHA) 920 (e.g., drill string), perhaps located at the lower portion of the drill pipe 918.

The BHA 920 may include a MWD/LWD tool 921 including a hybrid transceiver 100, an RSS 924 including a substantially identical hybrid transceiver 100, an intervening mud motor 990 between the RSS and MWD/LWD tool 921, and a drill bit 926. The drill bit 926 may operate to create the borehole 912 by penetrating the surface 904 and the subsurface formations 914.

The hybrid transceivers 100 may be used for downhole communication during drilling operations within a borehole 912. Using the hybrid transceivers 100 may provide telemetry from a tool on one side of the mud motor 990 to a tool or RSS on the other side of the mud motor 990.

During drilling operations within the borehole 912, the drillstring 908 (perhaps including the drill pipe 918 and the BHA 920) may be rotated by the rotary table 910, a top drive 925, and/or by the mud motor 990 that is located down hole. The drill collars 922 may be used to add weight to the drill bit 926. Drill collars 922 may also operate to stiffen the BHA 920, allowing the BHA 920 to transfer the added weight to the drill bit 926, and in turn, to assist the drill bit 926 in penetrating the surface 904 and subsurface formations 914.

During drilling operations within the borehole 912, a mud pump 932 may pump drilling fluid (sometimes referred to as "drilling mud") from a mud pit 934 through a hose 936 into the drill pipe 918 and down to the drill bit 926. The drilling fluid can flow out from the drill bit 926 and be returned to the surface 904 through an annular area 940 between the drill pipe 918 and the sides of the borehole 912. The drilling fluid may then be returned to the mud pit 934, where such fluid is filtered. In some examples, the drilling fluid can be used to cool the drill bit 926, as well as to provide lubrication for the drill bit 926 during drilling operations. Additionally, the drilling fluid may be used to remove subsurface formation cuttings created by operating the drill bit 926.

A workstation 992 including a controller 996 may include modules comprising hardware circuitry, a processor, and/or memory circuits that may store software program modules and objects, and/or firmware, and combinations thereof that are configured to execute the method of FIG. 5. For example, the workstation 992 with controller 996 may be configured to receive telemetry from downhole and transmit commands downhole to the RSS 924 to control an inclination angle of the drill bit 926.

In an example, the hybrid transceivers 100 may be used to communicate across an intervening portion of the BHA (e.g., mud motor 990). The hybrid transceiver 100 located closest to the surface 904 may then communicate the telemetry to another module (not shown) for transmission to the surface 904 and the workstation 992. The workstation 992, with its controller 996, may process that telemetry and transmit commands downhole to the closest hybrid transceiver 100 that then transmits the commands to the hybrid transceiver 100 further downhole.

FIG. 10 is a diagram showing a wireline system 1064, according to various examples of the disclosure. The system 1064 may comprise at least one wireline logging tool body 1020, as part of a wireline logging operation in a borehole 912, that includes the hybrid transceiver 100 as described previously.

In the illustrated example, a second wireline logging tool body 1075 may be located either downhole or uphole from the first wireline tool body 1020. The second wireline logging tool body 1020 includes a second hybrid transceiver 100 to enable downhole communication with the first hybrid transceiver 100 in the first wireline tool body 1020.

A drilling platform 986 equipped with a derrick 988 that supports a hoist 1090 can be seen. Drilling oil and gas wells is commonly carried out using a string of drill pipes connected together so as to form a drillstring that is lowered through a rotary table 910 into the borehole 912. Here it is assumed that the drillstring has been temporarily removed from the borehole 912 to allow the wireline logging tool bodies 1020, 1075, such as a probe or sonde with the hybrid transceivers 100, to be lowered by wireline or logging cable 1074 (e.g., slickline cable) into the borehole 912. Typically, the wireline logging tool bodies 1020, 1075 are lowered to the bottom of the region of interest and subsequently pulled upward at a substantially constant speed.

During the upward trip, at a series of depths, various instruments may be used to perform quality measurements on the casing and cement lining of the borehole 912 or to determine geological formation characteristics. The wireline data may be communicated between the hybrid transceivers 100 and/or to a surface logging facility (e.g., workstation 992) for processing, analysis, and/or storage. The logging facility 992 may be provided with electronic equipment for various types of signal processing as described previously. The workstation 992 may have a controller 996 that is coupled to one of the hybrid transceivers 100 through the wireline 1074 or telemetry in order to receive data from downhole.

While above examples described communication between two downhole devices using the hybrid transceiver, other examples may use the hybrid transceiver to communicate between downhole and the surface. For example, if a wireline probe or sonde is close enough to a surface transceiver, the wireline probe or sonde may be able to transmit downhole data to the surface and the surface transceiver may be able to transmit instructions and/or data to the probe or sonde.

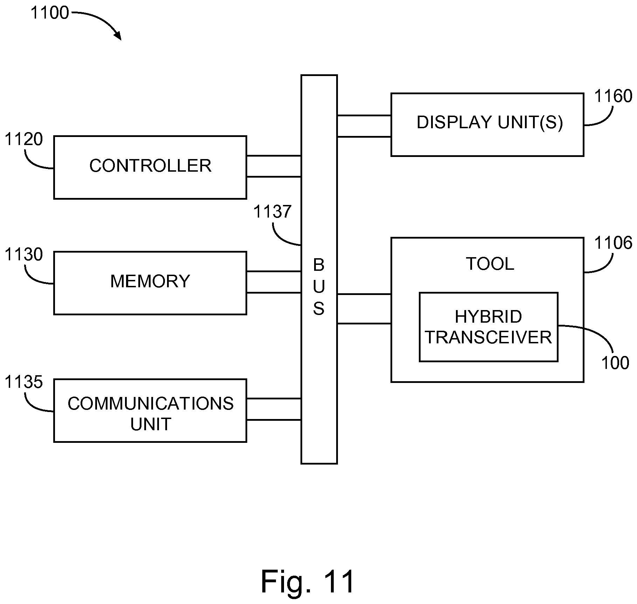

FIG. 11 is a block diagram of an example system 1100 operable to implement the activities of multiple methods, according to various examples of the disclosure. The system 1100 may include a tool housing 1106 having the hybrid transceiver 100 disposed therein. The system 1100 may be implemented as shown in FIGs. 9 and 10 with reference to the workstation 992 and controller 996.

The system 1100 may include a controller 1120, a memory 1130, and a communications unit 1135. The memory 1130 may be structured to include a database. The controller 1120, the memory 1130, and the communications unit 1135 may be arranged to operate as a processing unit to control operation of the logging tool 210 and execute any methods disclosed herein.

The communications unit 1135 may include communications capability for communicating from downhole to the surface. Such downhole communications can include a telemetry system such as mud pulse telemetry. In another example, the communications unit 1135 may use combinations of wired communication technologies and wireless technologies at frequencies that do not interfere with on-going measurements.

The system 1 100 may also include a bus 1137 that provides electrical conductivity among the components of the system 1100. The bus 1137 can include an address bus, a data bus, and a control bus, each independently configured or in an integrated format. The bus 1137 may be realized using a number of different communication mediums that allows for the distribution of components of the system 1 100. The bus 1 137 may include a network. Use of the bus 1137 may be regulated by the controller 1120.

The system 1100 may include display unit(s) 1160 as a distributed component on the surface of a wellbore, which may be used with instructions stored in the memory 1 130 to implement a user interface to monitor the operation of the tool 1106 or components distributed within the system 1100. The user interface may be used to input parameter values for thresholds such that the system 1 100 can operate autonomously substantially without user intervention in a variety of applications. The user interface may also provide for manual override and change of control of the system 1 100 to a user. Such a user interface may be operated in conjunction with the communications unit 1135 and the bus 1 137.

These implementations can include a machine-readable storage device having machine-executable instructions, such as a computer-readable storage device having computer-executable instructions. Further, a computer-readable storage device may be a physical device that stores data represented by a physical structure within the device. Such a physical device is a non-transitory device. Examples of machine-readable storage devices can include, but are not limited to, read only memory (ROM), random access memory (RAM), a magnetic disk storage device, an optical storage device, a flash memory, and other electronic, magnetic, and/or optical memory devices.

## Claims

1. A hybrid toroid and band gap transceiver (100) for downhole telemetry comprising:
a toroid antenna (311) disposed on a housing (301) of a downhole device; and
a band gap antenna having a first pole (310) disposed on the housing substantially adjacent to the toroid antenna and a second pole (330) disposed on the housing and separated from the first pole by a band gap (BG), wherein the hybrid toroid and band gap transceiver is capable of transmitting or receiving a signal, representative of downhole data.

2. The transceiver of claim 1, wherein the toroid antenna is disposed circumferentially around the housing.

3. The transceiver of claim 1 or 2, wherein the band gap antenna is disposed circumferentially around the housing.

4. The transceiver of claim 1, 2 or 3, wherein the toroid antenna and the first pole are separated by a dielectric material (312), and/or the first pole is disposed longitudinally along the housing from the toroid antenna, and/or the toroid antenna is disposed beneath the first pole and separated from the first pole by a dielectric material.

5. The transceiver of any preceding claim, wherein the second pole is a collar of the housing.

6. The transceiver of any preceding claim, wherein the toroid antenna and the band gap antenna are coupled together in series.

7. The transceiver of any preceding claim, wherein the toroid antenna and the band gap antenna are coupled together in series with a signal source (101).

8. A method comprising:
transmitting a signal, representative of downhole data, using a first hybrid toroid and band gap transceiver (420) disposed on a downhole device, wherein the signal is transmitted from the first hybrid toroid and band gap transceiver, comprising a toroid antenna (311) disposed on a housing (301) of the downhole device; and a bandgap antenna having a first pole (310) disposed on the housing substantially adjacent to the toroid antenna and second pole (330) disposed on the housing and separated from the first pole by a band gap (BG); and
receiving the signal using a second hybrid toroid and band gap transceiver (421).

9. The method of claim 8, wherein transmitting the signal comprises transmitting the signal past an intervening mud motor (402), sub, or tool in a drill string to the second hybrid toroid and band gap transceiver.

10. The method of claim 8 or 9, wherein receiving the signal using the second hybrid toroid and band gap transceiver comprises receiving the signal using the second hybrid toroid and band gap transceiver that is substantially identical to the first hybrid toroid and band gap transceiver.

11. The method of claim 8, 9 or 10 further comprising modulating the downhole data to generate the signal.

12. A system comprising:
a first downhole device comprising the transceiver of any of Claims 1 to 7 in a transmit mode; and
a second downhole device comprising the transceiver of any of Claims 1 to 7 in a receive mode.

13. The system of claim 12, wherein the first or second downhole device is disposed in a wireline tool (1020) or a drill string tool (921).

14. The system of claim 12 or 13, wherein the first downhole device is a rotary steerable system (RSS) (401) and the second downhole device is a measuring-while-drilling/logging-while-drilling (MWD/LWD) tool (403), and the system further comprising a mud motor disposed between the RSS and the MWD/LWD tool.

15. The system of claim 12, 13 or 14 wherein the toroid antenna and the band gap antenna are disposed circumferentially around the respective device.

## Patentansprüche

1. Hybrider Torus- und Bandabstand-Sende-Empfänger (100) für Bohrlochtelemetrie, umfassend:
eine Torusantenne (311), die an einem Gehäuse (301) einer Bohrlochvorrichtung angeordnet ist; und
eine Bandabstandsantenne, die einen ersten Masten (310), der an dem Gehäuse im Wesentlichen angrenzend an die Torusantenne angeordnet ist, und einen zweiten Masten (330) aufweist, der an dem Gehäuse angeordnet ist und von dem ersten Masten durch einen Bandabstand (BG) getrennt ist, wobei der hybride Torus- und Bandabstand-Sende-Empfänger in der Lage ist, ein Signal, das Bohrlochdaten darstellt, zu senden oder zu empfangen.

2. Sende-Empfänger nach Anspruch 1, wobei die Torusantenne in Umfangsrichtung um das Gehäuse angeordnet ist.

3. Sende-Empfänger nach Anspruch 1 oder 2, wobei die Bandabstandsantenne in Umfangsrichtung um das Gehäuse angeordnet ist.

4. Sende-Empfänger nach Anspruch 1, 2 oder 3, wobei die Torusantenne und der erste Mast durch ein dielektrisches Material (312) getrennt sind und/oder der erste Mast in Längsrichtung entlang des Gehäuses von der Torusantenne aus angeordnet ist und/oder die Torusantenne unter dem ersten Masten angeordnet ist und von dem ersten Masten durch ein dielektrisches Material getrennt ist.

5. Sende-Empfänger nach einem der vorstehenden Ansprüche, wobei der zweite Mast ein Halsstück des Gehäuses ist.

6. Sende-Empfänger nach einem der vorstehenden Ansprüche, wobei die Torusantenne und die Bandabstandsantenne in Reihe miteinander gekoppelt sind.

7. Sende-Empfänger nach einem der vorstehenden Ansprüche, wobei die Torusantenne und die Bandabstandsantenne in Reihe mit einer Signalquelle (101) miteinander gekoppelt sind.

8. Verfahren, umfassend:
Senden eines Signals, das Bohrlochdaten darstellt, unter Verwendung eines ersten hybriden Torus- und Bandabstand-Sende-Empfängers (420), der an einer Bohrlochvorrichtung angeordnet ist, wobei das Signal von dem ersten hybriden Torus- und Bandabstand-Sende-Empfänger gesendet wird, der eine Torusantenne (311), die an einem Gehäuse (301) der Bohrlochvorrichtung angeordnet ist, umfasst; und eine Bandabstandsantenne, die einen ersten Masten (310), der an dem Gehäuse im Wesentlichen angrenzend an die Torusantenne angeordnet ist, und einen zweiten Masten (330) aufweist, der an dem Gehäuse angeordnet ist und von dem ersten Masten durch einen Bandabstand (BG) getrennt ist, und
Empfangen des Signals unter Verwendung eines zweiten hybriden Torus- und Bandabstand-Sende-Empfängers (421).

9. Verfahren nach Anspruch 8, wobei das Senden des Signals das Senden des Signals über einen dazwischenliegenden Schlammmotor (402), eine Welle oder ein Werkzeug in einem Bohrstrang an den zweiten hybriden Torus- und Bandabstand-Sende-Empfänger umfasst.

10. Verfahren nach Anspruch 8 oder 9, wobei das Empfangen des Signals unter Verwendung des zweiten hybriden Torus- und Bandabstand-Sende-Empfängers das Empfangen des Signals unter Verwendung des zweiten hybriden Torus- und Bandabstand-Sende-Empfängers umfasst, der im Wesentlichen identisch mit dem ersten hybriden Torus- und Bandabstand-Sende-Empfänger ist.

11. Verfahren nach Anspruch 8, 9 oder 10, ferner umfassend das Modulieren der Bohrlochdaten, um das Signal zu erzeugen.

12. System, umfassend:
eine erste Bohrlochvorrichtung, die den Sende-Empfänger nach einem der Ansprüche 1 bis 7 in einem Sendemodus umfasst; und
eine zweite Bohrlochvorrichtung, die den Sende-Empfänger nach einem der Ansprüche 1 bis 7 in einem Empfangsmodus umfasst.

13. System nach Anspruch 12, wobei die erste oder zweite Bohrlochvorrichtung in einem drahtlosen Werkzeug (1020) oder einem Bohrstrangwerkzeug (921) angeordnet ist.

14. System nach Anspruch 12 oder 13, wobei die erste Bohrlochvorrichtung ein Richtbohrsystem (RSS) (401) ist und die zweite Bohrlochvorrichtung ein Werkzeug zur Messung während des Bohrvorgangs/Aufzeichnung während des Bohrvorgangs (MWD/LWD) (403) ist und das System ferner einen Schlammmotor umfasst, der zwischen dem RSS- und dem MWD-/LWD-Werkzeug angeordnet ist.

15. System nach Anspruch 12, 13 oder 14, wobei die Torusantenne und die Bandabstandsantenne in Umfangsrichtung um die jeweilige Vorrichtung angeordnet sind.

## Revendications

1. Émetteur-récepteur hybride de tore et de bande interdite (100) pour télémesure de fond de trou, comprenant :
une antenne de tore (311) disposée sur un boîtier (301) d'un dispositif de fond de trou ; et
une antenne de bande interdite ayant un premier pôle (310) dispose sur le boîtier de manière sensiblement adjacente à l'antenne de tore et un second pôle (330) disposé sur le boîtier et séparé du premier pôle par une bande interdite (BG), dans lequel l'émetteur-récepteur hybride de tore et de bande interdite est capable d'émettre ou de recevoir un signal, représentant des données de fond de trou.

2. Émetteur-récepteur selon la revendication 1, dans lequel l'antenne de tore est disposée circonférentiellement autour du boîtier.

3. Émetteur-récepteur selon la revendication 1 ou la revendication 2, dans lequel l'antenne de bande interdite est disposée circonférentiellement autour du boîtier.

4. Émetteur-récepteur selon la revendication 1, 2 ou 3, dans lequel l'antenne de tore et le premier pôle sont séparés par un matériau diélectrique (312), et/ou le premier pôle est disposé longitudinalement le long du boîtier à partir de l'antenne de tore, et/ou l'antenne de tore est disposée sous le premier pôle et séparée du premier pôle par un matériau diélectrique.

5. Émetteur-récepteur selon une quelconque revendication précédente, dans lequel le second pôle est un collier du boîtier.

6. Émetteur-récepteur selon une quelconque revendication précédente, dans lequel l'antenne de tore et l'antenne de bande interdite sont couplées en série.

7. Émetteur-récepteur selon une quelconque revendication précédente, dans lequel l'antenne de tore et l'antenne de bande interdite sont couplées en série avec une source de signal (101).

8. Procédé comprenant :
l'émission d'un signal, représentant des données de fond de trou, à l'aide d'un premier émetteur-récepteur hybride de tore et de bande interdite (420) disposé sur un dispositif de fond de trou, dans lequel le signal est émis à partir du premier émetteur-récepteur hybride de tore et de bande interdite, comprenant une antenne de tore (311) disposée sur un boîtier (301) du dispositif de fond de trou ; et une antenne de bande interdite ayant un premier pôle (310) disposé sur le boîtier de manière sensiblement adjacente à l'antenne de tore et un second pôle (330) disposé sur le boîtier et séparé du premier pôle par une bande interdite (BG), et
la réception du signal à l'aide d'un second émetteur-récepteur hybride de tore et de bande interdite (421) .

9. Procédé selon la revendication 8, dans lequel l'émission du signal comprend l'émission du signal vers le second émetteur-récepteur hybride de tore et de bande interdite en passant par un moteur à boue intervenant (402), un caisson, ou un outil dans une colonne de forage.

10. Procédé selon la revendication 8 ou 9, dans lequel la réception du signal à l'aide du second émetteur-récepteur hybride de tore et de bande interdite comprend la réception du signal à l'aide du second émetteur-récepteur hybride de tore et de bande interdite qui est sensiblement identique au premier émetteur-récepteur hybride de tore et de bande interdite.

11. Procédé selon la revendication claim 8, 9 ou 10, comprenant en outre la modulation des données de fond de trou pour générer le signal.

12. Système comprenant :
un premier dispositif de fond de trou comprenant l'émetteur-récepteur selon l'une quelconque des revendications 1 à 7 en mode émetteur ; et
un second dispositif de fond de trou comprenant l'émetteur-récepteur selon l'une quelconque des revendications 1 à 7 en mode récepteur.

13. Système selon la revendication 12, dans lequel le premier ou le second dispositif de fond de trou est disposé dans un outil filaire (1020) ou un outil de colonne de forage (921).

14. Système selon la revendication 12 ou 13, dans lequel le premier dispositif de fond de trou est un système orientable rotatif (RSS) (401) et le second dispositif de fond de trou est un outil de mesure en cours de forage/de diagraphie en cours de forage (MWD/LWD) (403), et le système comprenant en outre un moteur à boue disposé entre le RSS et l'outil MWD/LWD.

15. Système selon la revendication 12, 13 ou 14, dans lequel l'antenne de tore et l'antenne de bande interdite sont disposées circonférentiellement autour du dispositif respectif.
